# DEMANDE DE BREVET EUROPEEN

(11) **EP 2 733 439 A2**
(43) Date de publication de la demande: **21.05.2014**
(21) Numéro de dépôt: 13177146.1
(22) Date de dépôt: 19.07.2013
(51) Int. Cl.: F24J 2/52, F24J 2/46

(54) **Ensemble, système et procédé de fixations de panneaux solaires**

(30) Priorité: 20.07.2012 BE 201200508
(71) Demandeur: Crombez, Marc, 4610 Queue-du-Bois (BE)
(72) Inventeur: Crombez, Marc, 4610 Queue-du-Bois (BE)
(74) Mandataire: Coulon, Ludivine

(57) **Abrégé**

Ensemble et procédé de fixations de panneaux solaires (P) comprenant un profilé (5) et une pièce de liaison (3) munie d'un logement (19) qui comprend une paroi de fond (20), une première saillie (21) et une deuxième saillie courbe (22) à une distance prédéterminée de manière à former un logement (19) serré audit profilé (5), le profilé (5) comprenant une première gorge interne (14) longitudinale destinée à accueillir une extrémité distale de ladite deuxième saillie courbe (22) et une première arrête arrondie (15).

## Description

La présente invention se rapporte à un ensemble de fixations de panneaux solaires comprenant un profile et une pièce de liaison dans lequel
- ladite pièce de liaison comprend
   ■ une première partie munie d'un orifice de fixation agencé pour connecter ladite pièce de liaison à un cochet de toiture,
   ■ une deuxième partie s'étendant perpendiculairement à ladite première partie et comprenant en saillie dans la direction opposée à ladite première partie un logement pour ledit profilé,
- ledit profilé comprenant
   ■ une première face longitudinale munie d'au moins un orifice de fixation agencé pour recevoir un moyen de fixation d'un panneau solaire ou photovoltaïque,
   ■ une deuxième et une troisième faces latérales longitudinales, perpendiculaires à ladite première face longitudinale et,
   ■ une quatrième face d'appui, perpendiculaire aux deuxième et troisième face latérales longitudinales et parallèle à ladite première face

Un tel dispositif est connu par exemple du document WO2006/101392 qui décrit un dispositif de fixation de panneaux solaires à une toiture.

Dans le système de fixation décrit, le crochet de toiture est posé à cheval sur un élément de structure d'une toiture et fixé à une pièce de liaison. Ensuite, une partie du profilé est destiné à être logé par pincement (« snap fixation » or « clic connexion ») dans le logement de la pièce de liaison, de telle façon qu'une partie du profilé est introduite dans le logement de la pièce de liaison et ensuite pincée dans ce logement de manière serrée et pincée.

Malheureusement, de tels profilés présentent de nombreuses gorges sur leur pourtour, rendant de cette manière l'assemblage des panneaux solaires peut aisée. En effet, lorsqu'un l'homme de métier souhaite préparer la structure de soutien d'un ou plusieurs panneaux solaire, il positionne d'abord les crochets et ensuite les pièces de liaisons, de manière solidaire au crochet.

Une fois les pièces de liaison positionnées, il faut alors « clipser » les profilés dans les logements des pièces de liaisons. A cette étape, le placeur est souvent confronté, lorsqu'il essaye de saisir un profilé de l'emballage, à des profilés emboités l'un dans l'autre à cause des nombreuses gorges et saillies présentes sur leur pourtour. Rappelons qu'à ce moment, le placeur est sur un toit en position parfois peu stable. Il doit donc souvent lutter pour désolidariser les profilés les uns des autres et est même parfois confronté à des profilés qui sont tordus ou déformés en conséquence.

Une fois le profilé à placer récupéré, le placeur doit encore trouver le bon sens d'introduction. Il faut constater que les différentes faces de ce profilé ne sont pas identiques et que pourtant elles se ressemblent, ce qui rend difficile l'identification de la face à « clipser » dans le logement de la pièce de liaison. Si la rotation doit simplement être effectuée autour de l'axe longitudinal, l'effort est acceptable, mais dans certains cas, il sera nécessaire de faire tourner le profilé autour d'un axe médian, ce qui requiert une manipulation bien périlleuse en équilibre sur un toit.

L'invention a pour but de pallier les inconvénients de l'état de la technique en procurant un ensemble de fixation encore plus simple à connecter pour fixer des panneaux solaires ou photovoltaïques que les toitures.

Pour résoudre ce problème, il est prévu suivant l'invention, un dispositif, procédé tel qu'indiqué au début **caractérisé en ce que** ledit logement présente :
- une paroi de fond formée par ladite deuxième partie de ladite pièce de liaison,
- une première saillie à première extrémité de ladite paroi de fond, s'étendant sensiblement perpendiculairement, dans la direction opposée à ladite première partie,
- une deuxième saillie courbe s'étendant également dans la direction opposée à ladite première partie à une distance prédéterminée de manière à former un logement serré audit profilé dont la largeur en tout point correspond sensiblement à la largeur dudit profilé,
et **caractérisé en ce que**, ladite deuxième face dudit profilé comprend une première gorge interne longitudinale destinée à accueillir une extrémité distale de ladite deuxième saillie courbe, ledit profilé comprenant en outre une première arrête formée par l'intersection entre ladite quatrième face d'appui et un coté latéral de ladite première gorge qui est sensiblement arrondie pour coopérer avec ladite deuxième saillie courbe, laquelle est ainsi agencée pour loger ladite première arrête arrondie dudit profilé.

De cette façon, lorsque l'homme de métier doit saisir le profilé à « clipser » dans le logement, il n'a aucun mal à saisir le profilé dont il a besoin parmi les autres dès lors que ladite première arrête formée par l'intersection entre ladite quatrième face d'appui et un coté latéral de ladite première gorge est arrondie. En effet, de cette façon, ladite arête arrondie, même si elle s'engage dans une gorge d'un autre profilé lors de l'entreposage ne s'y bloque pas et en est aisément extraite. De plus, l'arrête arrondie à positionner dans ladite deuxième saillie courbe est facilement identifiable permettant ainsi à l'homme de métier d'identifier directement le positionnement adéquat du profilé dans le logement. Enfin, lorsque l'arrête arrondie est engagée dans ladite deuxième saillie courbe, par légère rotation, l'homme de métier engage entièrement le profilé dans ledit logement, de manière serrée pour assurer la fermeté de la connexion entre ladite deuxième saillie arrondie et ladite première saillie. De cette façon, ladite paroi de fond dudit logement entre en contact avec ladite quatrième face dudit profilé, évitant ainsi tout mouvement mutuel entre ladite pièce de liaison et le dit profilé, ce qui contribue à la fermeté de la connexion entre la pièce de liaison et ledit profilé (ou ultérieurement ledit panneau solaire ou photovoltaïque).

Avantageusement, ladite troisième face dudit profilé de l'ensemble selon la présente invention comprend également une deuxième gorge interne longitudinale destinée à accueillir une extrémité distale de ladite deuxième saillie courbe, ledit profilé comprenant en outre une deuxième arrête formée par l'intersection entre ladite quatrième face d'appui et un coté latéral de ladite deuxième gorge de ladite troisième face qui est sensiblement arrondie pour coopérer avec ladite deuxième saillie courbe, laquelle est ainsi agencée pour loger ladite deuxième arrête arrondie dudit profilé.

Dans cette forme de réalisation, ledit profilé est symétrique, ce qui permet de ne pas devoir retourner le profilé en position précaire si le sens de prise est l'inverse du sens de positionnement. De plus, la présence de cette deuxième gorge et de cette deuxième arrête arrondie, bien que multipliant le relief externe de la pièce, n'en augmente pas les possibilité d'emboitement des profilés les uns dans les autres à l'entreposage, dès lors que l'arrête arrondie est aisément extraite de la gorge d'un outre profilé par sa forme externe. De plus, lorsque les profilés doivent être découpés pour être ajustés à la taille d'un panneau solaire ou autre, la quantité de chute est réduite puisque les profilés peuvent être utilisés dans les deux sens.

Dans une forme de réalisation particulière, ladite troisième face latérale longitudinale dudit profilé comprend en outre une première rainure latérale longitudinale et dans lequel ladite première saillie de ladite pièce de liaison présente un épaulement longitudinal destiné à être engagé dans ladite première rainure de ladite troisième face latérale longitudinale.

La présence de l'épaulement longitudinal et de la rainure longitudinale s'emboîtant l'un dans l'autre permet de renforcer longitudinalement le site de la fixation du profilé dans la pièce de liaison. Rappelons que le profilé soutient le poids d'un panneau solaire ou photovoltaïque, ce qui exerce une force concentrée sur ladite deuxième saillie courbe. De cette façon, par la présence de la rainure et de l'épaulement, la caractéristique serrée de l'emboitement entre le profilé et la pièce de liaison est améliorée rendant tout glissement impossible, même sous l'effet de conditions climatiques sévères, au sein du logement et renforce de la même manière ladite pièce de liaison.

De préférence, ladite deuxième face latérale longitudinale dudit profilé comprend en outre une deuxième rainure latérale longitudinale et dans lequel ladite première saillie de ladite pièce de liaison présente un épaulement longitudinal destiné à être engagé dans ladite deuxième rainure de ladite troisième face latérale longitudinale.

De cette manière, ledit profilé selon l'invention est à nouveau symétrique, ce qui simplifie le placement.

Dans une forme de réalisation particulière selon l'invention, ladite paroi de fond formée par ladite deuxième partie de ladite pièce de liaison présente au moins un épaulement transversal, et dans lequel ladite quatrième face d'appui dudit profilé présente au moins une troisième rainure latérale longitudinale destinée à accueillir ledit au moins un épaulement transversal de ladite paroi de fond de ladite pièce de liaison.

Avantageusement, ladite paroi de fond formée par ladite deuxième partie de ladite pièce de liaison présente deux épaulements transversaux, et dans lequel ladite quatrième face d'appui dudit profilé présente une troisième rainure latérale longitudinale et une quatrième rainure latérale longitudinale, destinée chacune à être accueillie dans un des deux épaulements transversaux de ladite paroi de fond de ladite pièce de liaison.

Dans une mode de réalisation particulier de l'invention, ledit au moins un orifice de fixation de ladite première face longitudinale agencé pour recevoir un moyen de fixation d'un panneau solaire ou photovoltaïque est une gorge striée longitudinale, permettant ainsi de ne pas devoir ajuster la position des pièces de liaison en face des orifices de fixation dudit profilé et ainsi en simplifier grandement le placement.

Plus particulièrement, l'ensemble selon la présente invention comprend en outre une plaquette de fixation à placer transversalement entre ledit panneau solaire ou ledit panneau photovoltaïque et ladite première face longitudinale dudit profilé, permettant ainsi que répartir le poids du panneau solaire ou autre sur l'entière largeur du profilé par l'intermédiaire de la plaquette et ainsi de diminuer la déformation du profilé à l'usure.

De manière particulièrement préférentielle, ladite gorge striée comprend une section terminale évasée.

L'invention comprend avantageusement en outre une pièce de fixation munie d'une surface d'appui pour fixer un côté latéral d'un panneau solaire ou photovoltaïque et d'une extrémité présentant un profil complémentaire au profil de ladite gorge striée longitudinale de manière à y être insérée, ladite pièce de fixation présentant de préférence une épaisseur suffisante pour empêcher tout mouvement rotationnel de ladite pièce de fixation lorsqu'elle est insérée dans ladite gorge striée longitudinale.

Dans une forme de réalisation préférentielle, ladite section terminale évasée est jointe longitudinalement à au moins une partie d'une surface interne de ladite deuxième et de ladite troisième face latérale longitudinale dudit profilé. La présence de ces jointures longitudinales permet d'obtenir des renforts médians au sein du profilé et d'éviter ainsi sa déformation à l'entreposage, à l'usage et ainsi de suite.

De préférence, ledit ensemble selon la présente invention comprend en outre une équerre à placer entre ledit crochet de toiture et ladite pièce de liaison, permettant ainsi de positionner ladite pièce de liaison perpendiculairement à l'orientation dudit crochet de toiture au lieu de longitudinalement.

Plus particulièrement, selon l'invention, ladite deuxième saillie courbe présente une longueur de courbure supérieure ou égale à la moitié de la circonférence d'un cercle inscrit dans ladite deuxième saillie courbe, permettant ainsi de bloquer la rotation en sens inverse du profilé lorsque celui-ci est engagé dans ledit logement et éviter ainsi sa sortie

Avantageusement, ledit ensemble selon la présente invention comprend en outre une deuxième pièce de liaison et un deuxième profilé, ainsi qu'une pièce de connexion en forme de T destinée à solidariser longitudinalement deux profilés ensemble, bout à bout, par engagement d'une partie plane formant un pied dudit de T dans ladite gorge striée longitudinale.

D'autres formes de réalisation de l'ensemble suivant l'invention sont indiquées dans les revendications annexées.

L'invention a aussi pour objet un procédé de fixation d'un ensemble selon l'invention, comprenant les étapes de
- fixation d'un crochet de toiture sur une structure de soutien d'éléments de recouvrement de toiture,
- fixation de ladite pièce de liaison audit crochet de toiture par introduction d'un élément de fixation dans un orifice de fixation de ladite pièce de liaison et dans un orifice dudit crochet de toiture
- une introduction d'une arrête arrondie dudit profilé dans une deuxième saillie courbe de ladite pièce de liaison et une rotation de celui-ci afin de serrer ledit profilé dans un logement formé par ladite deuxième saillie courbe et ledit première saillie et à mettre en contact une quatrième face d'appui dudit profilé avec une paroi de fond dudit logement,
- un placement dudit panneau solaire ou photovoltaïque en appui sur une première face longitudinale dudit profilé avec introduction d'un élément de fixation dans un orifice de fixation présent sur ladite première face dudit profilé, ledit élément de fixation étant également fixé de manière solidaire audit panneau solaire ou photovoltaïque.

Dans un mode de réalisation préféré, une plaquette de fixation est placée transversalement entre ledit panneau solaire ou ledit panneau photovoltaïque et ladite première face longitudinale dudit profilé.

Avantageusement une pièce de fixation munie d'une surface d'appui pour fixer un côté latéral d'un panneau solaire ou photovoltaïque est fixée audit côté latéral dudit panneau solaire ou photovoltaïque et insérée dans ladite gorge striée longitudinale, ladite pièce de fixation présentant de préférence une épaisseur suffisante pour empêcher tout mouvement rotationnel de ladite pièce de fixation lorsqu'elle est insérée dans ladite gorge striée longitudinale.

Plus particulièrement le procédé comprend en outre une étape de placement d'une équerre entre ledit crochet de toiture et ladite pièce de liaison e manière à orienter ledit profiler perpendiculairement par rapport à une faîte de toit.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue en perspective d'un ensemble de fixation selon l'invention en position d'usage sur une toiture y fixant alors le panneau solaire.
La figure 2 est une vue en coupe d'un profilé selon la présente invention.
La figure 3 est une vue de côté d'une pièce de liaison de l'ensemble de fixation selon la présente invention, destiné à loger le profilé selon la figure 2 ou la figure 4.
La figure 4 est une vue en coupe d'une variante d'un profilé de l'ensemble de fixation selon la présente invention.
La figure 5 est une vue en coupe d'une forme de réalisation préférentielle d'un profilé selon la présente invention.
La figure 6 est une vue de côté d'une forme de réalisation préférentielle d'une pièce de liaison de l'ensemble de fixation selon la présente invention, destiné à loger le profilé selon la figure 5.

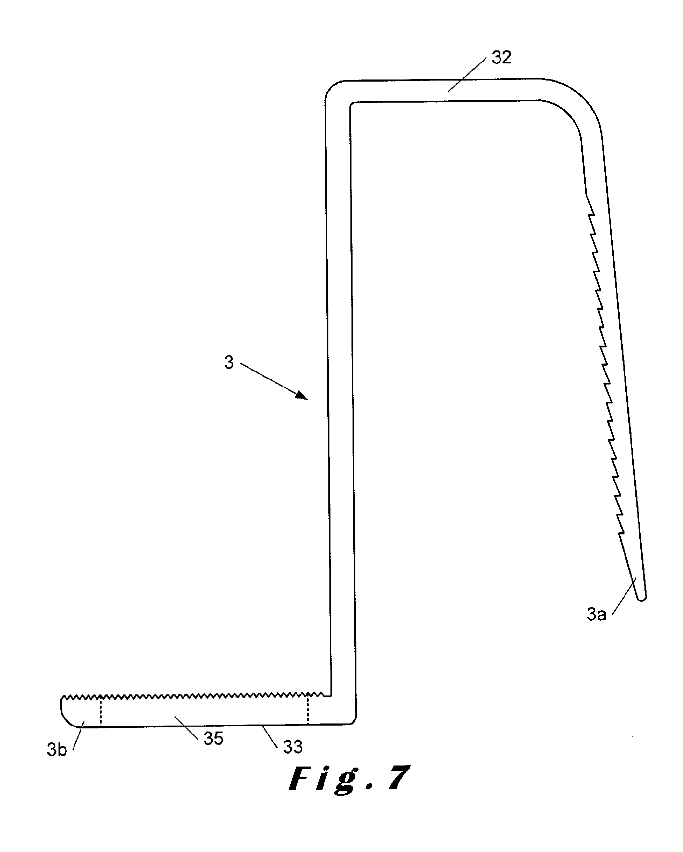

La figure 7 est une vue de côté d'un crochet pour toiture de l'ensemble de fixation selon la présente invention.
La figure 8 est une illustration d'un système de fixation selon la présente invention comprenant ledit profilé, le crochet pour toiture et ladite pièce de liaison.
La figure 9 est une illustration schématique d'une pièce de fixation latérale d'un panneau photovoltaïque ou solaire, selon la présente invention.
La figure 10 est une illustration schématique d'une pièce de connexion en forme de T solidarisant longitudinalement deux profilés ensemble.

Sur les figures, les éléments identiques ou analogues portent les mêmes références.

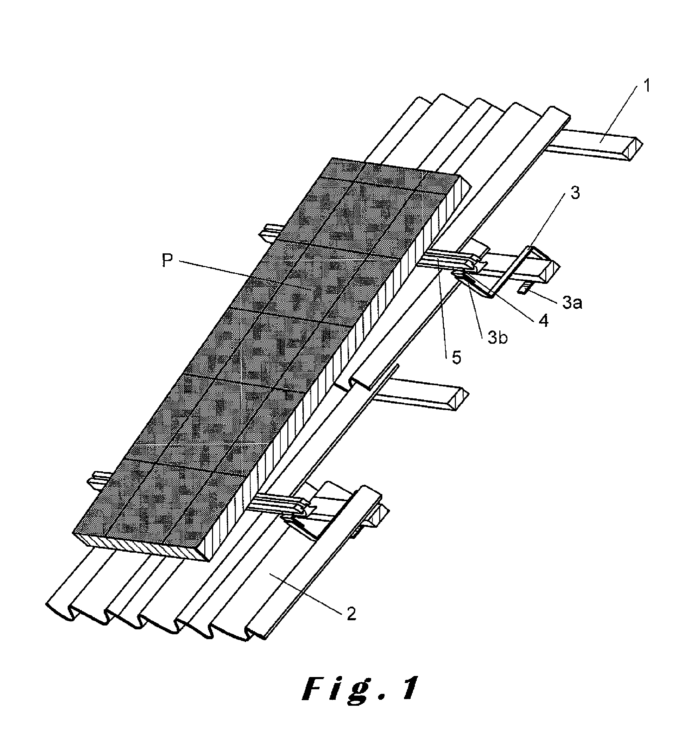

Comme on peut le voir à la figure 1, typiquement une toiture comprend des éléments de structure 1 d'une toiture sur lesquels sont positionnées des tuiles ou ardoises 2. Un crochet de toiture 3 est ainsi posé à cheval sur un élément de structure 1. Le crochet de toiture 3 présente donc une extrémité 3a positionnées sous les tuiles et une extrémité en saillie 3b. Sur l'extrémité 3b, une pièce de liaison, 4 est fixée qui comprend un logement pour un profilé 5. Ensuite, le panneau solaire ou photovoltaïque P ou encore tout type d'élément à fixer sur un toit est fixé, de préférence par des vis sur le profilé 5.

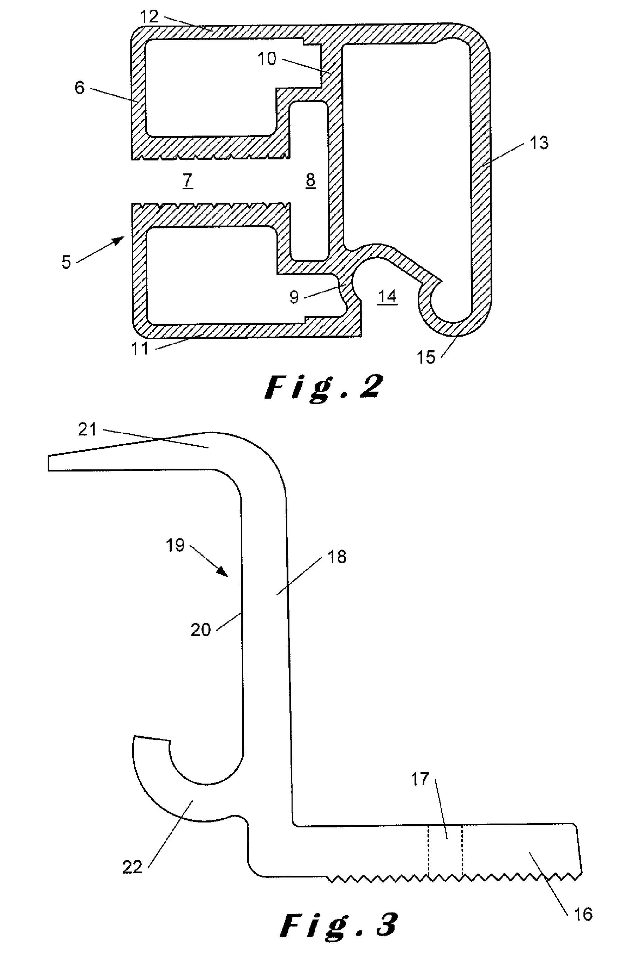

Dans sa forme de réalisation la plus simple illustrée à la figure 2, le profilé 5 comprend une première face longitudinale 6 munie d'au moins un orifice de fixation 7, de préférence sous la forme d'une gorge striée longitudinale 7, qui est agencé pour recevoir un moyen de fixation d'un panneau solaire ou photovoltaïque ou de tout autre élément. Cette gorge striée longitudinale comporte ici une section terminale 8 évasée, de préférence une section terminale évasée jointe longitudinalement à au moins une partie d'une surface interne de ladite deuxième et de ladite troisième face latérale longitudinale dudit profilé par des parties de jonction 9 et 10 pouvant être de n'importe quelle forme, permettant ainsi de le renforcer de l'intérieur contre la déformation. Le profilé de l'ensemble selon la présente invention est de préférence métallique, en particulier en aluminium et est obtenu par extrusion.

Le profilé comporte également une deuxième et une troisième faces latérales longitudinales, respectivement 11 et 12, perpendiculaires à ladite première face longitudinale 6 et une quatrième face d'appui 13 perpendiculaire aux deuxième et troisième faces latérales longitudinales 11 et 12 et parallèle à ladite première face 6.

La deuxième face dudit profilé 5 comprend une première gorge 14 interne longitudinale destinée à accueillir une extrémité distale d'une pièce de liaison telle qu'illustrée à la figure 3. De plus, une première arrête 15, formée par l'intersection entre ladite quatrième face d'appui 13 et un coté latéral de ladite première gorge 14 est sensiblement arrondie pour coopérer avec ladite deuxième saillie courbe, laquelle est ainsi agencée pour loger ladite première arrête arrondie dudit profilé.

La pièce de liaison 4 du profilé 5 de la figure 2 est illustrée à la figure 3 où on peut voir que ladite pièce de liaison comprend une première partie 16 munie d'un orifice de fixation 17 agencé pour connecter ladite pièce de liaison à un cochet de toiture 3 et une deuxième partie 18 s'étendant perpendiculairement à ladite première partie 16 et comprenant en saillie dans la direction opposée à ladite première partie un logement 19 pour ledit profilé 5.

Ce logement 19 présente une paroi de fond 20 formée par ladite deuxième partie 18 de ladite pièce de liaison 4 et comporte également une première saillie 21 à première extrémité de ladite paroi de fond 20 qui s'étend perpendiculairement, dans la direction opposée à ladite première partie 16. En outre, une deuxième saillie 22 courbe est présente, qui s'étend également dans la direction opposée à ladite première partie 16 à une distance prédéterminée de manière à former un logement serré audit profilé 5 dont la largeur de logement en tout point correspond sensiblement à la largeur dudit profilé 5. Comme mentionné précédemment, la deuxième face 11 dudit profilé 5 comprend la première gorge 14 interne longitudinale destinée à accueillir une extrémité distale de ladite deuxième saillie courbe 22 de la pièce de liaison 4.

De plus, la première arrête 15, formée par l'intersection entre ladite quatrième face d'appui 13 et un coté latéral de ladite première gorge 14 est sensiblement arrondie pour coopérer avec ladite deuxième saillie courbe 22, laquelle est ainsi agencée pour loger ladite première arrête arrondie 15 dudit profilé 5.

Dans le forme de réalisation avantageuse illustrée à la figure 3, ladite deuxième saillie courbe 22 présente une longueur de courbure supérieure ou égale à la moitié de la circonférence d'un cercle inscrit dans ladite deuxième saillie courbe 22, de façon à bloquer ladite arrête arrondie 15, lorsque celle-ci est engagée dans ladite deuxième saillie courbe 22.

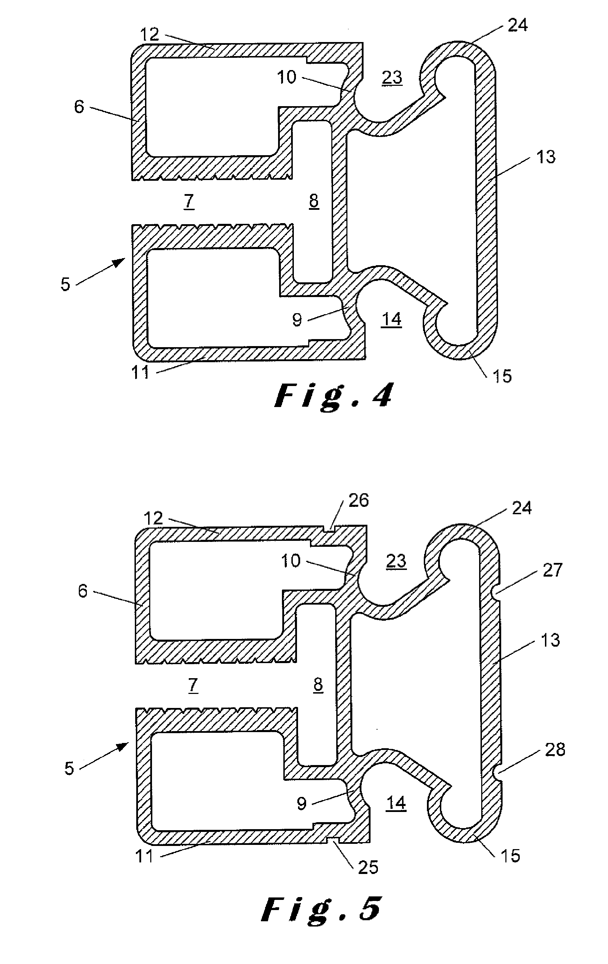

Une variante du profilé 5 illustré à la figure 3 est illustrée à la figure 4. Dans cette variante, ladite troisième face 12 dudit profilé 5 comprend également une deuxième gorge 23 interne longitudinale destinée à accueillir une extrémité distale de ladite deuxième saillie courbe 22. Le profilé 5 comprend de plus une deuxième arrête 24 formée par l'intersection entre ladite quatrième face d'appui 13 et un coté latéral de ladite deuxième gorge 23 de ladite troisième face 12 qui est sensiblement arrondie pour coopérer avec ladite deuxième saillie courbe 22, laquelle est ainsi agencée pour loger ladite deuxième arrête arrondie dudit profilé 5.

Encore une autre variante du profilé de l'ensemble selon l'invention est illustrée à la figure 5 où, comme on peut le voir, la troisième face 12 latérale longitudinale dudit profilé 5 comprend une première rainure 26 latérale longitudinale et la deuxième face 11 latérale longitudinale dudit profilé 5 comprend une deuxième rainure 25 latérale longitudinale. De plus, la quatrième face d'appui 13 du profilé 5 présente une troisième rainure 27 latérale longitudinale et une quatrième rainure 28 latérale longitudinale, destinée chacune à être accueillie dans un des deux épaulements transversaux de ladite paroi de fond de ladite pièce de liaison.

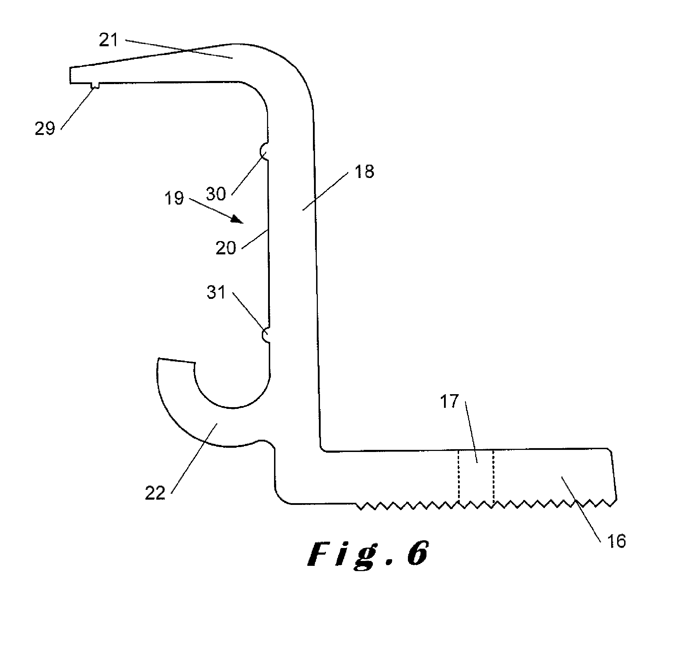

La figure 6 illustre la pièce de liaison complémentaire audit profilé 5 illustré à la figure 5. Dans la picèe de liaison variante illustrée à la figure 6, la première saillie 21 présente un épaulement 29 longitudinal destiné à être engagé dans la première rainure 26 de ladite troisième face 12 latérale longitudinale ou dans ladite deuxième rainure 25 de ladite deuxième face 11 latérale longitudinale. En outre, la paroi de fond 20 présente avantageusement deux épaulements transversaux 30, 31 destiné à être insérrés dans la troisième rainure 27 et dans la quatrième rainure 28 de la quatrième face d'appui 13 du profilé 5.

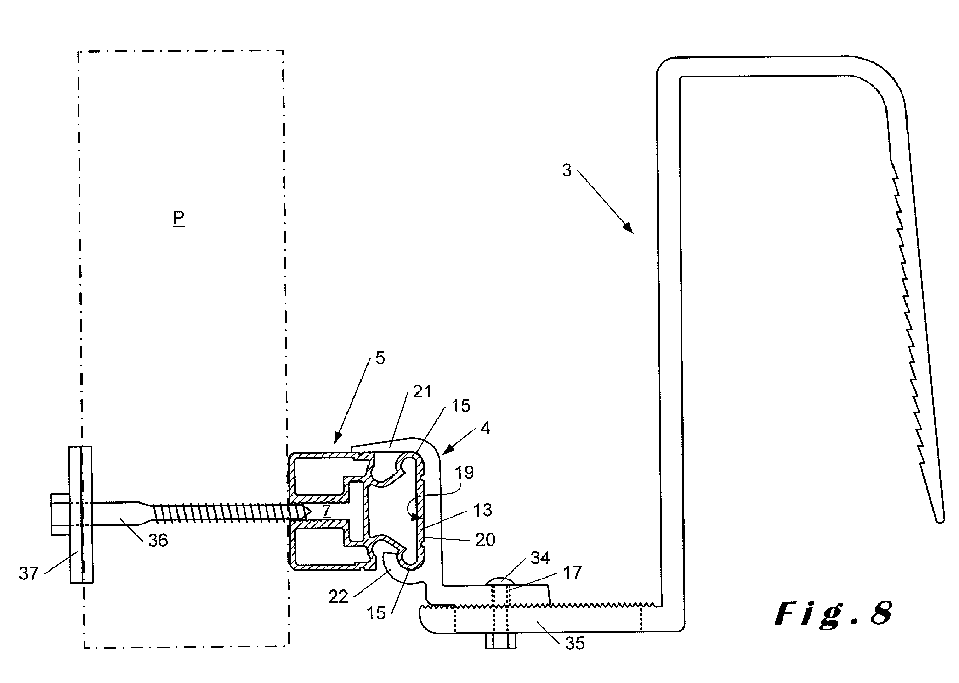

Le crochet de toiture 3 est illustré de manière détaillée à la figure 8. Le crochet de toiture 3 comprend en substance deux parties. Une première partie en U 32 comprenant la première extrémité 3a cachée par les tuiles 2, lorsque le crochet 3 est positionné à cheval sur un élément de structure 1 d'une toiture, c'est-à-dire lorsque l'élément de structure 1 est logé dans le creu du U. Le crochet comporte également une deuxième partie 33 en saillie, s'étendant à l'opposé de l'extrémité cachée 3a et qui comporte l'extrémité 3b susdite et qui est perpendiculaire au côté latéral auquel elle est reliée.

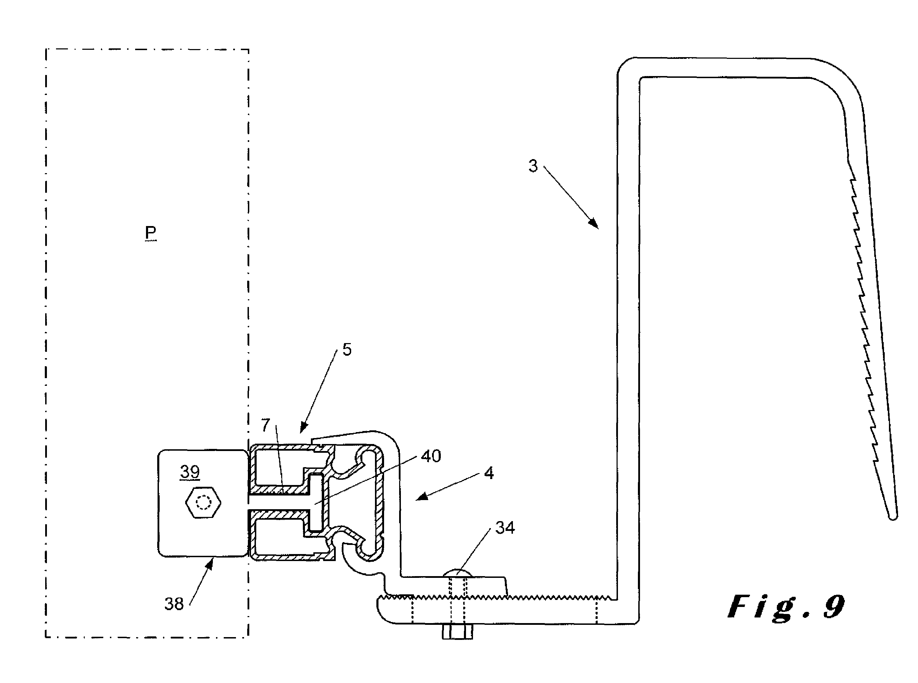

Comme on peut le voir à la figure 1 ainsi qu'à la figure 9, le procédé de fixation d'un ensemble selon l'invention est extrêmement aisé. Il s'agit en effet de tout d'abord fixer un crochet de toiture 3 sur une structure de soutien 1 d'éléments de recouvrement de toiture 2. La pièce de liaison 4 est ensuite fixée audit crochet de toiture 3 par introduction d'un élément de fixation 34 dans l'orifice de fixation 17 de ladite pièce de liaison 4 et dans un orifice 35 dudit crochet de toiture 3.

Une arrête arrondie 15 dudit profilé 5 est ensuite introduite dans une deuxième saillie courbe 22 de ladite pièce de liaison 4 et une rotation est effectuée afin de serrer ledit profilé 5 dans un logement 19 formé par ladite deuxième saillie courbe 22 et ladite première saillie 21 et afin de mettre en contact une quatrième face d'appui 13 dudit profilé 5 avec une paroi de fond 20 dudit logement 19.

Le panneau solaire ou photovoltaïque P est alors fixé en appui sur une première face longitudinale 6 dudit profilé 5 avec introduction d'un élément de fixation 36 dans l'orifice de fixation 7 présent sur ladite première face 6 dudit profilé 5. L'élément de fixation 36 étant également fixé de manière solidaire audit panneau solaire ou photovoltaïque P.

Une plaquette de fixation 37 est ensuite placée avantageusement transversalement entre ledit panneau solaire ou ledit panneau photovoltaïque P et ladite première face longitudinale 6 dudit profilé 5.

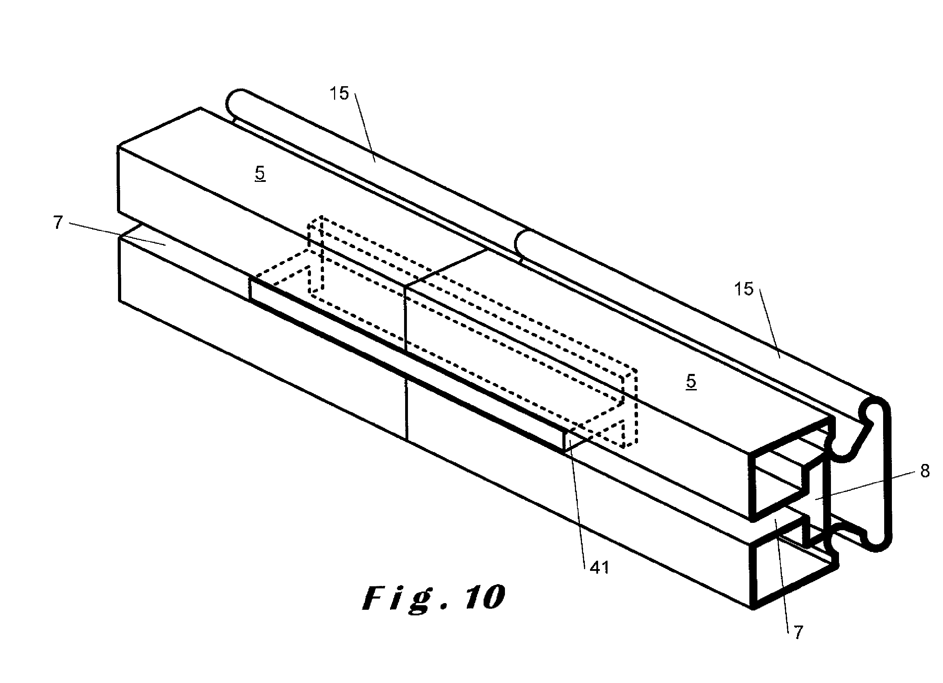

Comme on peut le voir à la figure 10, dans une forme avantageuse, une pièce de fixation 38 munie d'une surface d'appui 39 pour fixer un côté latéral d'un panneau solaire ou photovoltaïque P est fixée audit côté latéral dudit panneau solaire ou photovoltaïque P et insérée dans ladite gorge striée longitudinale 7. La pièce de fixation 37 présente de préférence une épaisseur suffisante pour empêcher tout mouvement rotationnel de ladite pièce de fixation lorsqu'elle est insérée dans ladite gorge striée longitudinale 7. Avantageusement, la pièce de fixation latérale 38 présente une extrémité évasée 40 , sensiblement complémentaire à l'extrémité évasée 8 de ladite gorge striée 7 pour s'engager dans la partie évasée 8 et ainsi simplifier grandement le placement et l'ajustement latérale du panneau P.

Comme on peut le voir maintenant à la figure 10, dans certains cas, il y a lieu de relier deux profilés 5 bout à bout. Dans ce cas, l'ensemble selon l'invention comprend également une pièce de connexion 41 destinée à être engagée dans la gorge striée 7 de la première face 6 du premier profilé 5 et dans la gorge striée 7 de la première face 6 du deuxième profilé 5.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Ensemble de fixations de panneaux solaires ou photovoltaïques (P) comprenant un profile (5) et une pièce de liaison (4) dans lequel
- ladite pièce de liaison (4) comprend
■ une première partie (16) munie d'un orifice de fixation (17) agencé pour connecter ladite pièce de liaison (4) à un cochet de toiture (3),
■ une deuxième partie (18) s'étendant perpendiculairement à ladite première partie (16) et comprenant en saillie dans la direction opposée à ladite première partie (16) un logement (19) pour ledit profilé (5),
- ledit profilé (5) comprenant
■ une première face (6) longitudinale munie d'au moins un orifice de fixation (7) agencé pour recevoir un moyen de fixation (36) d'un panneau solaire ou photovoltaïque (P),
■ une deuxième (11) et une troisième (12) faces latérales longitudinales, perpendiculaires à ladite première face (6) longitudinale et,
■ une quatrième face d'appui (13), perpendiculaire aux deuxième (11) et troisième face (12) latérales longitudinales et parallèle à ladite première face (6),
**caractérisé en ce que** ledit logement (19) présente
• une paroi de fond (20) formée par ladite deuxième partie (18) de ladite pièce de liaison (4),
• une première saillie (21) à première extrémité de ladite paroi de fond (20), s'étendant sensiblement perpendiculairement, dans la direction opposée à ladite première partie (16),
• une deuxième saillie courbe (22) s'étendant également dans la direction opposée à ladite première partie (16) à une distance prédéterminée de manière à former un logement (19) serré audit profilé (5) dont la largeur en tout point correspond sensiblement à la largeur dudit profilé (5),
et **caractérisé en ce que**, ladite deuxième face (11) dudit profilé comprend une première gorge interne (14) longitudinale destinée à accueillir une extrémité distale de ladite deuxième saillie courbe (22), ledit profilé (5) comprenant en outre une première arrête (15) formée par l'intersection entre ladite quatrième face d'appui (13) et un coté latéral de ladite première gorge (14) qui est sensiblement arrondie pour coopérer avec ladite deuxième saillie courbe (22), laquelle est ainsi agencée pour loger ladite première arrête arrondie (15) dudit profilé.

2. Ensemble selon la revendication 1, dans lequel ladite troisième face (12) dudit profilé (5) comprend également une deuxième gorge interne (23) longitudinale destinée à accueillir une extrémité distale de ladite deuxième saillie courbe (22), ledit profilé (5) comprenant en outre une deuxième arrête (24) formée par l'intersection entre ladite quatrième face d'appui (13) et un coté latéral de ladite deuxième gorge (23) de ladite troisième face (12) qui est sensiblement arrondie pour coopérer avec ladite deuxième saillie courbe (22), laquelle est ainsi agencée pour loger ladite deuxième arrête arrondie (24) dudit profilé.

3. Ensemble selon la revendication 1 ou la revendication 2, dans lequel ladite troisième face latérale (12) longitudinale dudit profilé comprend en outre une première rainure (26) latérale longitudinale et dans lequel ladite première saillie (21) de ladite pièce de liaison présente un épaulement longitudinal (29) destiné à être engagé dans ladite première rainure (26) de ladite troisième face (12) latérale longitudinale.

4. Ensemble selon la revendication 2 ou 3, dans lequel ladite deuxième face latérale (11) longitudinale dudit profilé comprend en outre une deuxième rainure (25) latérale longitudinale et dans lequel ladite première saillie (21) de ladite pièce de liaison (4) présente un épaulement (29) longitudinal destiné à être engagé dans ladite deuxième rainure (25) de ladite deuxième face (11) latérale longitudinale.

5. Ensemble selon l'une quelconque des revendications 1 à 4, dans lequel ladite paroi de fond (20) formée par ladite deuxième partie (18) de ladite pièce de liaison (4) présente au moins un épaulement (30) transversal, et dans lequel ladite quatrième face d'appui (13) dudit profilé (5) présente au moins une troisième rainure (27) latérale longitudinale destinée à accueillir ledit au moins un épaulement (30) transversal de ladite paroi de fond (20) de ladite pièce de liaison (4).

6. Ensemble selon la revendication 5, dans lequel ladite paroi de fond (20) formée par ladite deuxième partie (18) de ladite pièce de liaison (4) présente deux épaulements transversaux (30, 31), et dans lequel ladite quatrième face d'appui (13) dudit profilé (5) présente une troisième rainure (27) latérale longitudinale et une quatrième rainure (28) latérale longitudinale, destinée chacune à être accueillie dans un des deux épaulements (30,31) transversaux de ladite paroi de fond (20) de ladite pièce de liaison (4).

7. Ensemble selon l'une quelconque des revendications 1 à 6, dans lequel ledit au moins un orifice de fixation (7) de ladite première face (6) longitudinale agencé pour recevoir un moyen de fixation (36) d'un panneau solaire ou photovoltaïque (P) est une gorge striée longitudinale.

8. Ensemble selon l'une quelconque des revendications 1 à 7, comprenant en outre une plaquette de fixation (37) à placer transversalement entre ledit panneau solaire ou ledit panneau photovoltaïque (P) et ladite première face (6) longitudinale dudit profilé (5).

9. Ensemble selon la revendication 7 ou 8, dans lequel ladite gorge striée comprend une section terminale évasée (8).

10. Ensemble selon la revendication 9, comprenant en outre une pièce de fixation (38) munie d'une surface d'appui(39) pour fixer un côté latéral d'un panneau solaire ou photovoltaïque (P) et d'une extrémité présentant un profil complémentaire au profil de ladite gorge striée (7) longitudinale de manière à y être insérée, ladite pièce de fixation (38) présentant de préférence une épaisseur suffisante pour empêcher tout mouvement rotationnel de ladite pièce de fixation (38) lorsqu'elle est insérée dans ladite gorge striée longitudinale (7).

11. Ensemble selon la revendication 9 ou la revendication 10, dans lequel ladite section terminale évasée (8) est jointe longitudinalement à au moins une partie d'une surface interne de ladite deuxième (11) et de ladite troisième (12) face latérale longitudinale dudit profilé.

12. Ensemble selon l'une quelconque des revendications 1 à 11, comprenant en outre une équerre à placer entre ledit crochet de toiture et ladite pièce de liaison.

13. Ensemble selon l'une quelconque des revendications 1 à 12, dans lequel ladite deuxième saillie courbe (22) présente une longueur de courbure supérieure ou égale à la moitié de la circonférence d'un cercle inscrit dans ladite deuxième saillie courbe (22).

14. Ensemble selon l'une quelconque des revendications 7 à 13, comprenant en outre une deuxième pièce de liaison (4) et un deuxième profilé (5), ainsi qu'une pièce de connexion (41) en forme de T destinée à solidariser longitudinalement deux profilés ensemble, bout à bout, par engagement d'une partie plane formant un pied dudit de T dans ladite gorge striée longitudinale.

15. Procédé de fixation d'un ensemble selon l'une quelconque des revendications 1 à 13, comprenant les étape de
- fixation d'un crochet de toiture (3) sur une structure (1) de soutien d'éléments de recouvrement de toiture (2),
- fixation de ladite pièce de liaison (4) audit crochet de toiture (3) par introduction d'un élément de fixation (34) dans un orifice de fixation (35) de ladite pièce de liaison (4) et dans un orifice dudit crochet de toiture (3),
- une introduction d'une arrête arrondie (15) dudit profilé (5) dans une deuxième saillie courbe (22) de ladite pièce de liaison (4) et une rotation de celui-ci afin de serrer ledit profilé (5) dans un logement (19) formé par ladite deuxième saillie courbe (22) et ladite première saillie (21) et à mettre en contact une quatrième face d'appui (13) dudit profilé (5)avec une paroi de fond (20) dudit logement (19),
- un placement dudit panneau solaire ou photovoltaïque (P) en appui sur une première face longitudinale (6) dudit profilé (5) avec introduction d'un élément de fixation (36) dans un orifice de fixation (7) présent sur ladite première face (6) dudit profilé (5), ledit élément de fixation (36) étant également fixé de manière solidaire audit panneau solaire ou photovoltaïque (P).

16. Procédé selon la revendication 15, dans lequel une plaquette de fixation (37) est placée transversalement entre ledit panneau solaire ou ledit panneau photovoltaïque (P) et ladite première face (6) longitudinale dudit profilé (5).

17. Procédé selon la revendication 15 ou la revendication 16, dans lequel une pièce de fixation (38) munie d'une surface d'appui (39) pour fixer un côté latéral d'un panneau solaire ou photovoltaïque (P) est fixée audit côté latéral dudit panneau solaire ou photovoltaïque (P) et insérée dans ladite gorge striée longitudinale (7), ladite pièce de fixation (38) présentant de préférence une épaisseur suffisante pour empêcher tout mouvement rotationnel de ladite pièce de fixation (7) lorsqu'elle est insérée dans ladite gorge striée longitudinale (7).

18. Procédé selon l'une quelconque des revendications 15 à 17, comprenant en outre une étape de placement d'une équerre entre ledit crochet de toiture (3) et ladite pièce de liaison (4) de manière à orienter ledit profilé (5) perpendiculairement par rapport à une faîte de toit.
